# EUROPEAN PATENT APPLICATION

(11) **EP 4 635 993 A1**
(43) Date of publication of application: **22.10.2025**
(21) Application number: 24170641.5
(22) Date of filing: 16.04.2024
(51) Int. Cl.: C08F 210/16, C08F 4/24, C08F 2/34, C08F 2/01

(54) **CONTINUOUS GAS-PHASE POLYMERIZATION PROCESS WITH IMPROVED OPERABILITY**

(71) Applicant: Basell Polyolefine GmbH, 50389 Wesseling (DE)
(72) Inventor: MIHAN, Sharam, 65926 Frankfurt/M. (DE); SCHUELLER, Ulf, 65926 Frankfurt/M. (DE); LOEBER, Jens, 65926 Frankfurt/M. (DE); MIHAN, Sharam, 65926 Frankfurt/M. (DE)
(74) Representative: LyondellBasell

(57) **Abstract**

A process for the preparation of an ethylene polymer comprising polymerizing ethylene or copolymerizing ethylene and one or more other olefins in the presence of a Phillips-type chromium catalyst in a gas-phase polymerization reactor containing a reactor bed of particulate polymer, which gas-phase polymerization reactor is equipped with a cycle gas line for withdrawing reactor gas from the reactor, leading the reactor gas through a heat-exchanger for cooling and feeding the reactor gas back to the reactor, wherein the reactor gas returned to the polymerization reactor through the cycle gas line has been partly condensed and the amount of liquid in the reactor gas returned to the polymerization reactor is from 3.5 wt.% to 10 wt.% and a multicomponent catalyst retarding agent is fed in an amount in the range of from 0.05 ppm to 2.0 ppm by weight of dosed ethylene, the catalyst retarding agent comprising at least a first component and a second component, wherein the first component and the second component are different from one another.

## Description

### FIELD OF THE DISCLOSURE

The present disclosure relates to a continuous process for the preparation of ethylene homopolymers or ethylene copolymers comprising polymerizing ethylene or copolymerizing ethylene and one or more other olefins in the presence of a Phillips-type chromium catalyst in a gas-phase polymerization reactor.

### BACKGROUND OF THE DISCLOSURE

Gas-phase polymerization is one of the most spread out techniques for the preparation of polyethylene which can be carried out in a fluidized or stirred bed reactor in the presence of a catalyst, ethylene, fluidization gas and molecular weight regulator typically consisting of hydrogen.

Gas-phase fluidized-bed processes are characterized in that the bed comprising polymerizing polymer particles is kept in the fluidized state by introduction of a gas mixture from below. This gas mixture also removes the heat of polymerization from the reactor. The reaction gas is cooled in a heat exchanger located outside the reactor and is recirculated back into the reactor through a gas distributor plate (cycle gas). Phillips-type chromium catalysts are especially suitable for producing polyethylenes with a broad molecular weight distribution and a low level of chain branching. Operating gas-phase polymerizations in condensed mode is well known for ethylene polymerization processes using Ziegler-Natta or metallocene catalysts. Condensed mode operations are carried out, for example, to increase production rates. Using chromium-based catalysts in gas-phase polymerization operation in condensed mode was much less successful, especially for producing high density polyethylenes having a relatively high molecular weight.

The cycle gas entrains a certain amount of finely divided polymer and carries it from the reactor and into the cycle gas system. These polymer particles comprise active catalyst and can thus polymerize further in the cycle gas system. If these particles deposit in the cycle gas system, deposits and fouling can occur in these places. These deposits can lead to malfunctions (blockage of the cooler, conglutination in the compressor) and parts of these deposits can become detached again.

The detached deposits can block the holes of the gas distributor plate of the reactor leading to an uneven fluidization within the reactor and thus necessitate system shutdown and costly cleaning. If pieces of detached deposits get through the gas distributor plate into the reactor, the product quality is adversely affected by these particles by the formation of so-called specks or gels. Particularly in the case of products for film applications, out-of-specification material may thus be obtained.

For reducing the proportion of fine polymer dust in the cycle gas system, it is possible to install in the cycle gas line a cyclone downstream of the reactor outlet. However, complete precipitation cannot be achieved by means of a cyclone, as fine dust containing active catalyst may pass the cyclone.

Thus, there is still a need for a process for the preparation of an ethylene homopolymer or ethylene copolymer in the presence of a Phillips-type chromium catalyst, which allows increasing the production rate with a long-term operational stability, which results in ethylene polymers with outstanding mechanical and processing properties.

### SUMMARY OF THE DISCLOSURE

The present disclosure provides a process for the continuous production of an ethylene polymer comprising polymerizing ethylene or copolymerizing ethylene and one or more other olefins in the presence of a Phillips-type chromium catalyst in a gas-phase polymerization reactor containing a reactor bed of particulate polymer. The gas-phase polymerization reactor is equipped with a cycle gas line for withdrawing reactor gas from the reactor, leading the reactor gas through a heat-exchanger for cooling and feeding the reactor gas back to the reactor. The reactor gas recycled through the cycle gas line has been partly condensed and the amount of liquid in the reactor gas returned to the polymerization reactor is from 3.5 wt.% to 10 wt.% based on the total weight of the reactor gas. The polymerization is carried out at a temperature from 108°C to 125°C and a pressure from 0.1 MPa to 10 MPa. Furthermore, a catalyst retarding agent is fed in in an amount in the range of from 0.05 ppm to 2.0 ppm by weight of dosed ethylene, wherein the catalyst retarding agent comprises at least a first component and a second component, wherein the first and second component are different from one another.

With the increased condensation degree of the reactor gas in the recycle line, an increase in the plant production rate was observed. However, by just increasing the condensation degree, operability issues would arise, due to polymer deposition on the rather cold grid plate. The polymer depositing on the grid plate polymerize around the grid holes and thereby leading to grid fouling, which in turn leads to uneven fluidization. It has been surprisingly found that the addition of a multicomponent catalyst retarding agent prevents polymerization of the grid plate and ensures a long term operability of the plant, which could not be achieved by a single component catalyst retarding agent.

Hereinafter, further developments are specified which are each themselves advantageous per se and can be combined with one independently from one another.

For example, in some embodiments, the catalyst retarding agent may be fed into the cycle gas line at a point upstream the heat-exchanger.

Preferably, the first component may have a vapor pressure of 0.001 bar to 0.5 bar, preferably from 0.005 to 0.5 bar, measured at 20°C.

The first component may be a mono alcohol having from 1 to 4 carbon atoms. For example the first component can be methanol, ethanol or isopropanol. Preferably the first component is isopropanol.

In some embodiments, the second component may be an aliphatic carboxylic acid ester having from 8 to 24 carbon atoms and a melting point of less than 20°C.

In a further exemplary embodiment, the second component may be added in a higher wt.% than the first component. For example, the ratio of the second component to the first component may be between 1:1 to10:1, preferably between 2:1 to 6:1, more preferably between 3:1 and 5:1.

The process may be particularly suited for commercial scale fluidized-bed reactors. Commercial scale fluidized-bed reactors may preferably have a throughput of at least 10 t/h to 100 t/h. Preferably, the gas-phase fluidized-bed reactor may have a polymerization zone with a tube diameter of at least 2 m. The tube diameter in the polymerization zone of the fluidized-bed reactor may particularly be from 2 m to 10 m, preferably from 2.5 m to 5 m.

The presence of the catalyst retarding agent may cause a retardation or even deactivation of the catalyst. This may lead to a reduction of catalyst mileage. Mileage typically refers to the amount of polymer produced per unit of catalyst used. It's a measure of the efficiency of the catalyst in converting ethylene into polymer. In some embodiments, the catalyst mileage is reduced by at most 10 to 15% compared to the process without addition of a catalyst retarding agent.

In some embodiments, ethylene is copolymerized with 1-butene or with 1-hexene or mixtures thereof.

According to a further exemplary embodiment, the ethylene polymer has a density determined according to DIN EN ISO 1133:200, Method A at 23°C of from 0.918 g/cm³ to 0.970 g/cm³.

In some embodiments, the ethylene polymer may have a melt flow rate MFR₂₁ determined according to DIN EN ISO 1133:2005 at a temperature of 190°C under a load of 21.6 kg from 0.1 g/10 min to 100 g/10 min.

Preferably, an aluminum alkyl of formula AIR₃ or of formula AIRₙR'ₘ, in which R is a C₄-C₁₂-alkyl, R' is a C₄-C₂₄-alkenediyl group which is bridging two aluminum atoms, and n+m =3, is fed into the polymerization reactor in an amount in the range of from 0.0025 mole to 0.1 mole per ton of dosed ethylene.

### DETAILED DESCRIPTION OF THE DISCLOSURE

As used herein, the term "comprising" has the broad standard meaning "including", "encompassing", or "containing". It includes the explicitly recited elements and also allows the presence of other elements not recited. In addition to this broad encompassing meaning, as used herein, the term "comprising" may also have the limiting meaning "consisting of'. This means that any aspect or embodiment of the present application that is defined as comprising certain features, also includes the meaning of merely consisting of said features, whether this is explicitly stated or not. In addition, the term "comprising" may also have the meaning "consisting essentially of'.

It should be understood that the use of "and/or" is defined inclusively, such that the term "a and/or b" should be read to include the sets "a and b", "a or b", "a", "b". Preferably and in most cases "a and/or b" relates to two entities "a" and "b", wherein at least one of said entities is present in the embodiments described.

It should be noted that "upper", "top" or "above" as well as "lower", "bottom" or "below" refers to the arrangement of elements in the facility as assembled and as used and in accordance with the gravitational force of earth. Thus a bottom section is closer to the center of earth than a top section. This does not preclude a non-usable stage, wherein the arrangement deviates, e.g. during transportation of a disassembled facility to the installation site.

Any aspect, embodiment or feature of the disclosure described hereinabove or hereinbelow may be freely combined with any other aspect, embodiment or feature of the disclosure described hereinabove or hereinbelow.

The present disclosure provides a continuous process for the preparation of ethylene homopolymers or ethylene copolymers comprising polymerizing ethylene or copolymerizing ethylene and one or more other olefins in the presence of a chromium catalyst. Examples of olefins for copolymerization with ethylene are especially 1-olefins, i.e. hydrocarbons having terminal double bonds. The olefins can also be functionalized olefinically unsaturated compounds. Prefernce is given to linear or branched C₃-C₁₂-1-alkenes, in particular C₃-C₁₀-1-alkenes such as propylene, 1-butene, 1-pentene, 1-hexene, 1-heptene, 1-octene, 1-decene or branched C₂-C₁₀-1-alkenes such as 4-methyl-1-pentene or conjugated and nonconjugated dienes such as 1,3-butadiene, 1,4-hexadiene or 1 ,7-octadiene. Examples of olefins also include ones in which the double bond is part of a cyclic structure which can have one or more ring systems. Examples are cyclopentene, norbornene, tetracyclododecene or methylnorbornene or dienes such as 5-ethylidene-2-norbornene, norbornadiene or ethylnorbonadiene. It is also possible to polymerize mixtures of two or more olefins.

The process may be used for the homopolymerization or copolymerization of ethylene. Preferred comonomers are up to 20 wt.%, more preferably from 0.01 wt.% to 15 wt.% and especially from 0.05 wt.% to 12 wt.%, of C₃-C₈-1-alkenes, in particular 1-butene, 1-pentene, 1-hexene and/or 1-octene. In a preferred embodiment of the present disclosure, ethylene is copolymerized with 1-butene and/or with 1-hexene. Particular preference is given to a process in which ethylene is copolymerized with from 0.1 wt.% to 12 wt.% of 1-hexene and/or 1-butene.

The process of the present disclosure is carried out using a chromium catalyst, preferably a Phillips-type chromium catalyst. Phillips-type chromium catalysts are preferably prepared by applying a chromium compound to an inorganic support and subsequently activating the obtained catalyst precursor, preferably in the presence of oxygen or air, at temperatures in the range from 350°C to 1000°C, resulting in chromium present in valences lower than six being converted into the hexavalent state. Apart from chromium, further elements such as magnesium, calcium, boron, aluminum, phosphorus, titanium, vanadium, zirconium or zinc can also be used. Particular preference is given to the use of titanium, zirconium or zinc in combination with chromium. Combinations of the above mentioned elements are also possible. The catalyst precursor can be doped with fluoride prior to or during activation. As supports for Phillips-type catalysts, which are also known to those skilled in the art, aluminum oxide, silicon dioxide (silica gel), titanium dioxide, zirconium dioxide or their mixed oxides or cogels, or aluminum phosphate may be used. Further exemplary support materials can be obtained by modifying the pore surface area, e.g. by means of compounds of the elements boron, aluminum, silicon or phosphorus. Preference is given to using a silica gel. Preference is given to spherical or granular silica gels, with the former also being able to be spray dried. Further suitable support materials can be obtained by chemical modification of inorganic support materials e.g. by means of compounds of the elements boron, aluminium, silicon or phosphorus. The activated chromium catalysts can subsequently be prepolymerized or prereduced. The prereduction can, for example, be carried out by means of carbonmonoxide, hydrogen, ethylene, 1-olefins or metal alkyls.

The process of the present disclosure is carried out as gas-phase polymerization, i.e. as process in which the solid polymers are obtained from a gas-phase of the monomer or the monomers in a gas-phase polymerization reactor containing a reactor bed of particulate polymer. The gas-phase polymerization reactor is equipped with at least one cycle gas line for withdrawing reactor gas from the reactor, leading the reactor gas through a heat-exchanger for cooling and feeding the reactor gas back to the reactor. Suitable reactors are, for example, stirred gas-phase reactors, multizone circulating gas-phase reactors, or fluidized-bed gas-phase reactors. Reactors of these types are generally known to those skilled in the art.

Stirred gas-phase reactors, in which the reaction bed of polymer particles is kept in motion by means of a stirrer, can for example be horizontally or vertically stirred gas-phase reactors. The cooling of the polymerization usually occurs by withdrawing reactor gas from the reactor, leading the reactor gas through a heat-exchanger and feeding the reactor gas back to the reactor.

Multizone circulating reactors are gas-phase reactors in which two polymerization zones are linked to one another and the polymer is passed alternately a plurality of times through these two zones. Such reactors are, for example, described in WO 97/04015 A1 and WO 00/02929 A1 and have two interconnected polymerization zones, a riser, in which the growing polymer particles flow upward under fast fluidization or transport conditions, and a downcomer, in which the growing polymer particles flow in a densified form under the action of gravity. The polymer particles leaving the riser enter the downcomer and the polymer particles leaving the downcomer are reintroduced into the riser, thus establishing a circulation of polymer between the two polymerization zones, and the polymer is passed alternately a plurality of times through these two zones. It is also possible to operate the two polymerization zones of one multizone circulating reactor with different polymerization conditions by establishing different polymerization conditions in its riser and its downcomer. For this purpose, the gas mixture leaving the riser and entraining the polymer particles can be partially or totally prevented from entering the downcomer. This can for example be achieved by feeding a barrier fluid in the form of a gas and/or a liquid mixture into the downcomer, preferably in the upper part of the downcomer. The barrier fluid should have a suitable composition, different from that of the gas mixture present in the riser. The amount of added barrier fluid can be adjusted in a way that an upward flow of gas countercurrent to the flow of the polymer particles is generated, particularly at the top, acting as a barrier to the gas mixture entrained among the particles coming from the riser. In this manner it is possible to obtain two different gas composition zones in one multizone circulating reactor. Furthermore, it is possible to introduce make-up monomers, comonomers, molecular weight regulators such as hydrogen and/or inert fluids at any point of the downcomer, preferably below the barrier feeding point. Thus, it is also possible to create varying monomer, comonomer and/or hydrogen concentrations along the downcomer, resulting in a further differentiation of the polymerization conditions. The cooling of the polymerization usually occurs by withdrawing reactor gas leaving the riser, leading the reactor gas through a heat-exchanger and feeding the cooled reactor gas back to the reactor at a position before the riser for fast-fluidizing the polymer particles in the riser.

The process of the present disclosure is preferably carried out in a fluidized-bed gas-phase reactor. Fluidized-bed polymerization reactors are reactors in which the polymerization takes place in a bed of polymer particles which is maintained in a fluidized state by feeding in gas at the lower end of the reactor, usually below a gas distribution grid having the function of dispensing the gas flow, and taking off the gas again at the upper end of the reactor. The reactor gas is then returned to the lower end to the reactor via a cycle gas line equipped with a compressor and a heat exchanger.

The velocity of the reactor gas within the fluidized-bed reactor has to be sufficiently high to fluidize the bed of particulate polymer present in the tube serving as polymerization zone and to remove the heat of polymerization effectively. The velocity of the reactor gas velocity is generally specified as superficial velocity. To prevent the unintended transfer of small particles being carried from the polymerization zone into the cycle gas system, the gas-phase fluidized-bed reactor used for the process of the present disclosure preferably has a calming zone with an increased diameter at its upper end so as to reduce the velocity of the circulating gas. Preferably, the gas velocity in the calming zone is from one-third to one-sixth of the gas velocity in the polymerization zone.

It has been found that in particular large scale fluidized-bed reactors benefit from the introduction of a multicomponent catalyst retardant, when working in condensed mode. The fluidized-bed reactor may preferably be designed for a throughput of between 10 t/h to 100 t/h.... Preferably, the fluidized-bed reactor has an inner diameter in the polymerization zone of at least 2 m, particularly the fluidized-bed reactor may have a diameter from 2 m to 10 m, preferably from 2.5 m to 5 m.

For removing entrained polymer particles from the reactor gas withdrawn from the reactor, the cycle gas line can be equipped with a cyclone which is preferably located in the cycle gas line upstream of the heat-exchanger for cooling the cycle gas.

The circulated reactor gas is usually a mixture of the olefins to be polymerized and inert gases such as nitrogen and/or lower alkanes. The process for the preparation of an ethylene polymer according to the present disclosure is preferably conducted in the presence of nitrogen or a C₂-C₅ alkane as inert gas and more preferably in the presence of nitrogen or propane. The circulated reactor gas may further include a C₃-C₆ alkane to raise the molecular weight or specific heat of the gas in order to promote condensation. Examples of such condensing agents are propane, isobutane, cyclobutane isopentane, neopentane, n-hexane or iso-hexane. The content of C₃-C₆ alkanes in the reactor gas is preferably from 1 vol.% to 10 vol.%.

Furthermore, hydrogen may be added to the polymerization reactor. Hydrogen is then preferably added in an amount that the content of hydrogen in the reactor gas composition is from 1 vol.% to 10 vol.%.

Oxygen may also be added to the polymerization reactor. Oxygen is then preferably added in an amount that the content of oxygen in the reactor gas composition is from 0.1 ppm to 0.5 ppm by volume.

According to the present disclosure a multicomponent catalyst retarding agent is added in an amount of 0.05 ppm to 2.0 ppm, more preferably 0.1 ppm to 1 ppm, most preferably from 0.2 ppm to 0.7 ppm with respect to the weight of prepared ethylene polymer.

The multicomponent catalyst retarding agent may comprise at least two components of different kind. In some embodiments, the multicomponent catalyst retarding agent may comprise two to five components of different kind, preferably the multicomponent catalyst retarding agent comprises two components.

It is understood that "components of different kind" refers to components having different functional groups. For example, the multicomponent catalyst may comprise a first component and a second component. The components may be chosen from a list of the functional groups -NR₂, - NR-, OR-, -O-, =O, -OS, -S- and =S, where R is hydrogen or an alkyl radical having from 1 to 8 carbon atoms and are more preferably compounds which bear a plurality of such functional groups, with these groups being able to be identical or different.

In an exemplary embodiment, the catalyst retarding agent may comprise a first component which is selected from the group consisting of a linear or branched alcohol having 1 to 10 carbon atoms. Preferably the first component is selected from the group consisting of a monoalcohol having 1 to 6, more preferably 1 to 4 carbon atoms. most preferably, the first component is methanol, ethanol or isopropanol. When a first component, such as isopropanol is employed, it can be used preferably neat or is diluted with a hydrocarbon solvent such as isopentane for good dispersion. Other examples of hydrocarbon solvents can include, for example, hexane.

In a particularly preferred embodiment, the first component is selected from the group consisting of a linear or branched alcohol having 1 to 10 carbon atoms, preferably a monoalcohol having 1 to 6 carbon atoms. The second component may comprise an aliphatic carboxylic acid ester having from 8 to 24 carbon atoms, preferably from 10 to 20 carbon atoms and more preferably from 12 to 18 carbon atoms. The aliphatic carboxylic acid ester may preferably have a melting point, at atmospheric pressure, of less than 20°C, preferably of less than 10°C.

The carboxylic acid ester may be any combination of one or more aliphatic monocarboxylic acids, dicarboxylic acids or tricarboxylic acids and one or more aliphatic mono-alcohols, diols or triols as long as the total number of carbon atoms is from 8 to 24. Preferably, the carboxylic acid ester is a mono ester, i.e. an ester of aliphatic mono-alcohol and an aliphatic monocarboxylic acid, of formula R¹-C(O)OR² in which R¹ and R² are a straight chain or branched C₁-C₂₂-alkyl or C₂-C₂₂-alkenyl group or a C₃-C₂₂-cycloalkyl or a C₃-C₂₂-cycloalkenyl group. In a preferred embodiment of the present disclosure, R¹ has from 1 to 5 carbon atoms, more preferably from 2 to 5 carbon atoms, and R² has from 7 to 23 carbon atoms, more preferably from 8 to 18 carbon atoms and especially preferably from 10 to 16 carbon atoms. In another preferred embodiment of the present disclosure, R¹ has from 7 to 23 carbon atoms, more preferably from 8 to 18 carbon atoms and especially preferably from 10 to 16 carbon atoms and R² has from 1 to 5 carbon atoms and more preferably from 2 to 5 carbon atoms. The aliphatic acid ester may also comprise one or more additional heteroatoms of Groups 14, 15 or 16 of the Periodic Table of the Elements as long as the total number carbon atoms is from 8 to 24. Non-limiting examples of suitable catalyst poisons are isopropyl myristate, isopropyl laurate, isopropyl palmitate, isopropyl stearate, octylacetate, ethyloleate, laurylacetate, isobutyl myristate, butyl myristate, 2-ethylhexyl myristate or ethyl myristate. most preferably, the carboxylic acid ester of the present disclosure is isopropyl myristate. It is also possible to use mixtures of carboxylic acid esters.

The multicomponent catalyst retarding agent, in particular the combination of the alcohol and the aliphatic carboxylic acid ester as described above, may be added at any position of the gas-phase polymerization reactor. Preferably, the multicomponent catalyst retarding agent is fed into the cycle gas system at a position up-stream the heat-exchanger and, more preferably, the multicomponent catalyst retarding agent is fed into the cycle gas system at a position between the reactor and the cyclone (if present). The multicomponent catalyst retarding agent thus may have the opportunity of wetting the highly catalytically active fine dust particles. These wetted fine dust particles may then be removed from the cycle gas in the cyclone (if present). This process step may make it possible to remove the fine dust and also the multicomponent catalyst retarding agent from the circulating reactor gas, or at least to achieve a reduction in its concentration in the cycle gas. Preferably, the mixture of fine dust and multicomponent catalyst retarding agent which has been separated off in the cyclone is added to the polymerization product discharged from the polymerization reactor. As a result, less catalyst retarding agent may reach the reactor where it can have an adverse effect on the polymerization reaction. Alternatively, it may be possible to add larger amounts of the catalyst retarding agent to achieve more effective deactivation of the polymerization-active fine dust particles. In addition, fine dust which is not precipitated in the cyclone may be also wetted by the catalyst retarding agent, wherein polymerization and deposit formation in the cycle gas system may be avoided or reduced.

In an alternative embodiment, the circulated reactor gas is not passed through a cyclone. Instead, in this embodiment, the multicomponent catalyst retarding agent is preferably fed at a point after the reactor up-stream the heat-exchanger, and the circulating gas is then passed to a compressor and the heat-exchanger; these equipment items may be present in either order. Optionally, the multicomponent catalyst retarding agent is fed after the reactor and after the equipment (cycle gas compressor or cycle gas cooler) and before re-circulation. The cooled and compressed cycle gas may be then introduced back into the well-mixed particle bed of the gas-phase fluidized-bed reactor via a customary gas distributor plate. This may result in homogeneous gas distribution, which ensures good mixing of the particle bed.

In a preferred embodiment of the process of the present disclosure, the cooling of the reactor gas in the heat-exchanger located in the cycle gas line is carried out in a way that the reactor gas is partly condensed by cooling below the dew point and the amount of liquid in the reactor gas returned to the polymerization reactor is from 3.5 wt.% to 10 wt.%, preferably from 4 wt.% to 8 wt.%, and more preferably from 4.5 wt.% to 6 wt.%. The liquefied part of the reactor gas may be returned to the reactor together with the remaining gas as a two-phase mixture. It is however also possible to separate the liquid and the gaseous phase and return both portions separately to the reactor.

The polymerization of the present disclosure is carried out at a temperature from 30°C to 130°C, preferably from 108°C to 125°C, more preferably from 110°C to 120°C, and especially preferred from 108°C to 116°C.

According to the process of the present disclosure, the polymerization is carried out at a pressure from 0.1 MPa to 20 MPa, more preferably from 0.5 MPa to 10 MPa and in particular from 1.0 MPa to 5 MPa.

Preferably, the polymerization is carried out in the presence of an aluminum alkyl of formula AIR₃ or of formula AIRₙR'ₘ, in which R is, independently of each other, a C₄-C₁₂-alkyl, preferably a C₆-C₁₀-alkyl, R' is, independently of each other, a C₄-C₂₄-alkanediyl group which is bridging two aluminum atoms, and n + m = 3. Examples of aluminum alkyls of formula AIR₃ are tri-isobutylaluminum, tri-n-hexylaluminum, tri-n-octylaluminum, tri-n-decylaluminum, or tridodecylaluminum. An example for an aluminum alkyl of formula AIRₙR'ₘ is isoprenylaluminum which has the formula (i-C₄H₉)ₘAl(C₅H₁₀)ₙ with n/m ≥ 3,5. Preferred aluminum alkyls for the process of the present disclosure are tri-isobutylaluminum, tri-n-hexylaluminum, tri-n-octylaluminum and especially tri-n-hexylaluminum. It is also possible to conduct the process of the present disclosure in the presence of a mixture of such aluminum alkyls.

The aluminum alkyl compound can bed fed to the polymerization reactor as such. Preferably, the aluminum alkyl is fed as a solution, preferably as a solution in a hydrocarbon solvent like n-hexane or iso-hexane or as a solution in a mineral oil. The concentration of aluminum alkyl in a solution to be fed to the polymerization reactor is preferably from 0.5 wt.% to 5 wt.%, more preferably from 1 wt.% to 3 wt.%

Preferably, the aluminum alkyl is fed into the polymerization reactor in an amount which is in the range of from 0.0025 to 0.1 mole per ton of ethylene dosed into the polymerization reactor. Preferably, the amount of aluminum alkyl fed into the polymerization reactor is from 0.005 to 0.05 mole per ton of prepared ethylene polymer and more preferably from 0.01 to 0.04 mole per ton of prepared ethylene polymer.

The aluminum alkyl can be fed to polymerization process by introducing the aluminum alkyl into the polymerization reactor at any point of the reactor. However, preferably the aluminum alkyl is introduced into the polymerization reactor at a position where the reactor bed is present or the aluminum alkyl is introduced into the cycle gas line.

The gas-phase polymerization reactor, in which the process of the present disclosure is conducted, may be a single polymerization reactor. The gas-phase polymerization reactor may also be part of a reactor cascade of two or more polymerization reactors. Preferably, all polymerization reactors of the cascade are gas-phase reactors. In a preferred embodiment of the present disclosure, the reactor cascade is a series of two fluidized-bed reactors or a reactor cascade comprising a fluidized-bed reactor and a multizone circulating reactor in which preferably the fluidized-bed reactor is arranged upstream of the multizone circulating reactor. Such a reactor cascade of gas-phase reactors may further comprise additional polymerization reactors. Further reactors of such a reactor cascade can however also be of any kind of low-pressure polymerization reactors such as suspension reactors and may include a pre-polymerization stage.

The process of the present disclosure is preferably carried out in the presence of an antistatic agent. all the antistatic agents conventionally known in the art, which are able to avoid electrostatic charging, may be used in the process of the present disclosure. Common antistatic agents comprise antistatically acting compounds which have polar functional groups such as acid or ester groups, amine or amide groups or hydroxyl or ether groups. Examples of antistatically acting compounds are polysulfone copolymers, polymeric polyamines, oil-soluble sulfonic acids, polysiloxanes, alkoxyamines, polyglycol ethers, etc. Quite efficient as antistatic agents are further compositions which comprise more than one antistatically acting compound. An overview of antistatic agents suitable for polymerization processes is given in EP 0 107 127 A1. Examples of suitable antistatic agents are Statsafe^{™} 3000 and Statsafe^{™} 6000 commercially available from Innospec Speciality Chemicals

According to a preferred embodiment of the present disclosure, the antistatic agent is a mixture comprising an oil-soluble surfactant, water, and optionally an alcohol. For utilizing such mixtures, preferably a mixture of the oil-soluble surfactant, the water, optionally the alcohol, and one or more aliphatic hydrocarbons is prepared and then the mixture is introduced into the polymerization reactor. Preferred mixtures comprise from 10 to 69.9 wt.% of oil-soluble surfactant, from 0.1 to 2 wt.% of water, from 0 to 15 wt.% of alcohol and from 30 to 89.9 wt.% of aliphatic hydrocarbon and especially preferred mixtures comprise from 20 to 50 wt.% of oil-soluble surfactant, from 0.2 to 1 wt.% of water, from 2 to 10 wt.% of alcohol and from 40 to 77.8 wt.% of aliphatic hydrocarbon. The oil-soluble surfactant is preferably an ionic oil-soluble surfactant and is more preferably a strong organic acid comprising a hydrocarbyl group of from 6 to 40 carbon atoms. Suitable classes of organic acids are organic sulfonic acids, organic sulfinic acids or organic phosphonic acids. Preferably, the organic acid is a sulfonic acid. Especially preferred representatives of such oil-soluble surfactants are dinonylnaphthylsulfonic acids and dodecylbenzenesulfonic acids. Preferred alcohols are linear or branched C₁-C₁₂ alcohols, which can be mono alcohols, diols or triols. More preferably such alcohols are mono-alcohols having from 1 to 4 carbon atoms. most preferably the alcohol is methanol, ethanol or isopropanol. Preferred hydrocarbons for a preparing the antistatic mixtures are propane, isobutane, n-hexane, isohexane, EXXOL^{®} grades obtainable from ExxonMobil Chemical or white mineral oils. The amount of oil-soluble surfactant introduced into the polymerization reactor is preferably from 0.025 to 50 ppm per weight, with respect to the weight of the prepared ethylene polymer, and the amount of water introduced into the polymerization reactor is preferably from 0.005 to 0.5 ppm per weight with respect to the weight of the prepared ethylene polymer. Preferably, the amount of alcohol introduced into the polymerization reactor is from 0.05 ppm to 5 ppm per weight, with respect to the weight of the prepared polyethylene. Such antistatic agents are described in WO 2014/198693 A1.

The residence time of the mixture of reactants including gaseous and liquid reactants, catalyst, and polymer particles in the polymerization reactor is preferably in the range from 1 to about 6 hours and more preferably in the range from 1.5 to about 4 hours.

The process of the present disclosure allows efficiently preparing ethylene homopolymers or ethylene copolymers in the presence of a chromium catalyst with high catalyst productivity without operational problems such as fouling or sheeting in the cycle gas line or formation of fines and which results in ethylene polymers with outstanding optical, mechanical and processing properties and a low gel content.

The process of the present disclosure is especially preffered for the preparation of polyethylenes having a relatively high molecular weight. Preferably, the polyethylenes have a MFR_{21.6} at a temperature of 190°C under a load of 21.6 kg, determined according to DIN EN ISO 1133:2005, condition G, of from 0.1 to 100 g/10 min, more preferably of from 1 to 20 g/10 min, and especially of from 1.2 to 12 g/10 min. The ratio of MFR_{21.6} and MFR₅, determined according to DIN EN ISO 1133:2005, condition T, at a temperature of 190°C under a load of 5 kg, is preferably from 10 to 40, more preferably from 12 to 30 and especially from 15 to 25.

Polyethylenes obtained by the process of the present disclosure have preferably a density according to DIN EN ISO 1183-1 :2004, Method A at 23°C in the range of from 0.918 g/cm³ to 0.970 g/cm³, more preferably in the range of from 0.935 g/cm³ to 0.968 g/cm³ and especially preferred in the range of from 0.940 g/cm³ to 0.960 g/cm³.

Preferred polyethylenes obtained by the process of the present application have a content of vinyl groups/1000 carbon atoms, determined by means of IR in accordance with ASTM D 6248 98, of not more than 1.2 and more preferably a content of vinyl groups/1000 carbon atoms in the range from 0.5 to 1.0.

The polyethylenes obtained by the process of the present disclosure process are characterized by a low level of polymer gels. In a preferred embodiment of the present disclosure, the number of gels, determined by preparing a 50 µm cast film, analyzing the film defects by means of an optical scanning device and classifying and counting the film defects according to their size, is not more than 1000/m², more preferably not more than 800/m² and especially not more than 500/m².

The polyethylenes obtained by the process of the present disclosure process are further characterized by a low content of catalyst residues. Preferably the ash content of the obtained polyethylene, determined according to DIN EN ISO 3451-1:2008-11, is not more than 250 ppm, more preferably not more than 200 ppm and especially not more than 150 ppm.

The processes of the present disclosure are distinguished in that the utilized Phillips-type catalysts achieve high productivity, i.e. produce a high amount of polymer per amount of employed catalysts.

The technology is illustrated below with the aid of examples, without being restricted thereto.

### EXAMPLES

The melt flow rate MFR_{21.6} was determined according to DIN EN ISO 1133-1:2005, condition G at a temperature of 190°C under a load of 21.6 kg.

The density was determined according to DIN EN ISO 1183-1:2004, Method A (Immersion) with compression molded plaques of 2 mm thickness. The compression molded plaques were prepared with a defined thermal history: Pressed at 180°C, 20MPa for 8 min with subsequent crystallization in boiling water for 30 min.

The catalyst mileage refers to the amount of polymer produced per unit of catalyst used. It's a measure of the efficiency of the catalyst in converting ethylene into polymer.

The agglomerates were measured by taking 1 ton of the produced polymer powder and sieving it through a 3 mm sieve. The sieving method was conducted analogously to DIN 53477. The material collected from the sieve, i.e. the polymer particles having a diameter of more than 3 mm, where weighted and their intrinsic viscosity was measured.

The intrinsic viscosity of the agglomerates is measured in tetrahydronaphthalene at 135°C. 5 g of polymer sample are treated under stirring for 30 min with a mixture comprising water (50 ml), acetone (50 ml) and HCl (20 ml) and then filtered. After washings with water and acetone the residue is dried in an oven under vacuum conditions at 70°C for 2 hours.

The so obtained sample is dissolved in tetrahydronaphthalene at 135°C and then the solutions is poured into the capillary viscometer. The viscometer tube (Ubbelohde type) is surrounded by a cylindrical glass jacket; this setup allows temperature control with a circulating thermostated liquid. The passage of the meniscus in front of the upper lamp starts the counter which has a quartz crystal oscillator. The meniscus stops the counter as it passes the lower lamp and the efflux time is registered: This is converted into a value of intrinsic viscosity through Huggins' equation, knowing the flow time of the pure solvent at the same experimental conditions (same viscometer and same temperature).

The electrostatic charges present in the fluidized-bed reactor were measured by a sensor (Correstat 3410; Progression, Inc.; Haverhill, MA, USA), which monitors charge activity and polarity within the reactor. It has a measurement range from +/- 0 to 0.1 nA full scale. For the evaluation of the electrostatic charges inside the reactor, the difference between measured negative and positive charges was chosen. The maximum difference is 0.2 nA and is defined as 100% scale whereas no variation in the electrostatic charge is referred to as 0% scale.

Based on experience and continuous observation of the reactor conditions, the operability was classified according to four following categories.
- Very bad operability: Large increase of pressure differential at the grid plate which is a sign of polymer plugging openings of the grid plate. The plugging lead to a shut down within 2 months.
- Bad operability: Some increase of pressure differential at the grid plate. The plugging lead to a shut down within 4 months.
- Good operability: Stable reactor behavior with minor fluctuations in terms of pressure differential at the grid plate. Plugging of the grid plate is observed after a long term run of about 4 months.
- Excellent operability: Stable reactor behavior without fluctuations in terms of pressure differential after a long term run of about 4 months.

### Example 1

### Preparation of Phillips-type catalyst

A Phillips-type catalyst was prepared as in Example 1 of WO 99/29736 A1 except that an amount of Cr(NO₃)s9H₂O solution was used such that the resulting intermediate contained 0.3 wt.% of chromium and that the chromium-doped support was activated at 560°C.

### Example 2

### Polymerization

A high-density polyethylene was prepared using the catalyst obtained in Example 1. The polymerization was carried out in a stainless steel fluidized-bed reactor having an internal diameter of 5 m equipped with a gas circulation system comprising a cycle gas line having a cyclone upstream of a heat exchanger, control systems for controlling temperature and pressure and feeding lines for ethylene, 1-hexene, nitrogen and n-hexane. The reactor pressure was controlled to be 2.2 MPa. 1-Hexene was introduced into the reactor at a rate of 9 kg per ton of prepared polyethylene. The feeding of the other compounds was controlled to obtain a reactor gas composition of 55 vol.% ethylene and 5 vol.% n-hexane, with the remainder being 1-hexene and nitrogen.

The catalyst was injected in a discontinuous way by means of a dosing valve with nitrogen. In addition, trihexylaluminum (THA; obtained from Chemtura Organometallics GmbH, Bergkamen, Germany) was added to the reactor in an amount of 10 ppm per weight THA with respect to the weight of the prepared polyethylene, and an antistatic agent was added to the reactor in an amount of 8 ppm per weight with respect to the weight of the prepared polyethylene. The antistatic agent was a mixture of 0.6 wt.% water, 6 wt.% isopropanol, 30 wt.% dodecylbenzenesulfonic acid and 63.4 wt.% n-heptane which had previously been prepared by shaking the components until a clear homogeneous stable formulation had been obtained.

Isopropyl myristate (IPM) was metered as a 2.66 wt.% solution in hexane and Isopropanol (iPrOH) was metered as a 0.64 wt.% solution in hexane via a nozzle into the cycle gas line at the midpoint of the distance from the entry of the reactor gas into the cycle gas line and the entry of the reactor gas into the cyclone. The amount of added isopropyl myristate was 0.4 ppm per weight with respect to the weight of the prepared polyethylene and the amount of added isopropanol was 0.1 ppm with respect to the weight of the prepared polyethylene.

After four months of very smooth polymerization without chunk formation or any disruption of the discharge system, the operation was stopped for inspection of the polymerization reactor, cycle gas line, cyclone and heat-exchanger. No fouling or layer formation could be observed in the equipment parts. The operability was excellent with no increase of the differential pressure at the grid plate showcasing that the grid openings were not plugged by polymer deposits on the grid. The reaction conditions in the polymerization reactor and the properties of the obtained polyethylene are reported in Table 1.

### Example 3

The polymerization of Example 2 was repeated, except that the amount of added isopropanol was 0.095 ppm with respect to the weight of the prepared polyethylene. No fouling or layer formation could be observed in the equipment parts. The operability was excellent with no increase of the differential pressure at the grid plate showcasing that the grid openings were not plugged by polymer deposits on the grid. The reaction conditions in the polymerization reactor and the properties of the obtained polyethylene are reported in Table 1.

### Comparative Example A

The polymerization of Example 2 was repeated, except that the reactor was operated under conditions that the reactor gas returned to the reactor through the cycle gas line was not partly condensed and no catalyst retarding agent was fed to the cycle line. The operability was good with small fluctuations in terms of reactor skin temperatures. No chunks were discharged from the reactor. The detailed reaction conditions in the polymerization reactor and the properties of the obtained polyethylene are reported in Table 1.

### Comparative Example B

The polymerization of Example 2 was repeated, except that the reactor was operated under conditions that the reactor gas returned to the reactor through the cycle gas line was partly condensed to a 3 wt% liquid level. Furthermore, no isopropanol has been fed to the cycle line. The operability was bad. After four months of operation, grid fouling could be observed.

### Comparative Example C

The polymerization of Example 2 was repeated, except that no isopropanol has been fed to the cycle line. The operability was very bad, leading to a shutdown of the reactor after two months due to extensive grid fouling.

**Table 1**

| | Example 2 | Example 3 | Comparative Example A | Comparative Example B | Comparative Example C |
|---|---|---|---|---|---|
| Reactor temperature [°C] | 114,8 | 114,5 | 115 | 115 | 115 |
| Reactor pressure [MPa] | 2,2 | 2,2 | 2,2 | 2,2 | 2,2 |
| Level of condensing [wt.%] | 5 | 5 | 0 | 3 | 5 |
| Delta p [mbar] after 4 months | 95 | 96 | 102 | 120 | 140* |
| Grid fouling | no | no | no | yes | yes |
| Production rate [t/h] | 35 | 34 | 25 | 29 | 33 |
| Alkyl [ppm of ethylene] | 6 | 5.5 | 5 | 5.5 | 5 |
| Operability/fluidizatio n stability | excellent | excellent | good | bad | very bad |
| Static charges [%] | 30 | 20 | 60 | 100 | 70 |
| Residence time [h] | 2.0 | 2.0 | 3,5 | 3 | 2.0 |
| Retarder agent iPrOH ppm | 0.10 | 0.10 | 0 | 0 | 0 |
| Retarder agent IPM ppm | 0.4 | 0.5 | 0.3 | 0.4 | 0.5 |
| MFR_{21.6} [g/10 min] | 6.3 | 6.1 | 6.2 | 6.3 | 6.4 |
| Density [g/cm³] | 0.945 | 0.945 | 0.945 | 0.945 | 0.945 |
| Agglomerates after 1 month [g per tonne of polymer] | none | none | 50 | 480 | 540 |
| Intrinsic viscosity of agglomerates [dl/g] | n.a | n.a | 4.5 | 10 | 11 |
| Catalyst Mileage [g/g] | 9500 | 9000 | 10500 | 9800 | 9500 |

| | | | | | |
|---|---|---|---|---|---|
| ** measured before shutdown after 2 months* | | | | | |

The comparison of Examples 2 and 3 with Comparative Example A and Comparative Example B shows that it is possible to increase the production rate when raising the amount of liquid in the reactor gas returned to the polymerization reactor to 5 wt.%. Furthermore, the operability and the electrostatics improve. Furthermore, it has been observed that the combination of IPM and iPrOH as catalyst retarding agent has a synergistic effect preventing grid fouling after long term operation, which is not achieved by use of either catalyst retardant alone.

## Claims

1. A process for the preparation of an ethylene polymer comprising polymerizing ethylene or copolymerizing ethylene and one or more other olefins in the presence of a Phillips-type chromium catalyst in a gas-phase polymerization reactor containing a reactor bed of particulate polymer, which gas-phase polymerization reactor is equipped with a cycle gas line for withdrawing reactor gas from the reactor, leading the reactor gas through a heat-exchanger for cooling and feeding the reactor gas back to the reactor, wherein the reactor gas returned to the polymerization reactor through the cycle gas line has been partly condensed and the amount of liquid in the reactor gas returned to the polymerization reactor is from 3.5 wt.% to 10 wt.%, the polymerization is carried out at a temperature from 108°C to 125°C and a pressure of from 0.1 MPa to 10 MPa, and a multicomponent catalyst retarding agent is fed in an amount in the range of from 0.05 ppm to 2.0 ppm by weight of prepared polyethylene, the catalyst retarding agent comprising at least a first component and a second component, wherein the first component and the second component are different from one another.

2. The process of claim 1, wherein the multicomponent catalyst retarding agent is fed into the cycle gas line at a point upstream the heat-exchanger.

3. The process of claim 1 or 2, wherein the first component has a vapor pressure of 0.01 bar to 0.5 bar measured at 20°C.

4. The process of any one of claims 1 to 3, wherein the first component is a mono alcohol having from 1 to 6 carbon atoms.

5. The process of any one of claims 1 to 4, wherein the first component is methanol, ethanol, or isopropanol.

6. The process of any one of claims 1 to 5, wherein the first component is added in an amount of 0.10 ppm to 0.45 ppm.

7. The process of any one of claims 1 to 6, wherein the second component is an aliphatic carboxylic acid ester having from 8 to 24 carbon atoms and a melting point of less than 20°C.

8. The process of any one of claims 1 to 7, wherein the second component is added in a higher amount than the first component.

9. The process of any one of claims 1 to 8, wherein a weight ratio of the second component to the first component is between 1:1 to 10:1, preferably between 2:1 to 8:1, more preferably between 3:1 to 6:1.

10. The process of any one of claims 1 to 9, wherein the gas-phase polymerization reactor is a fluidized-bed reactor having a reactor diameter of at least 2 meter.

11. The process of any one of claims 1 to 10, wherein a catalyst mileage is reduced by at most 10 to 15% compared to the process without addition of the catalyst retarding agent.

12. The process of any one of claims 1 to 11, wherein ethylene is copolymerized with 1-butene or 1-hexene or with mixtures thereof.

13. The process of any one of claims 1 to 12, wherein the ethylene polymer has a density determined according to DIN EN ISO 1133:2005, Method A at 23°C of from 0.918 g/cm³ to 0.970 g/cm³.

14. The process of any one of claims 1 to 13, wherein the ethylene polymer has a MFR_{21.6} determined according to DIN EN ISO 1133:2005 measured at a temperature of 190°C under a load of 21.6 kg of from 0.1 to 100 g/10 min.
